Europäisches Patentamt

European Patent Office

Office européen des brevets

(11) Veröffentlichungsnummer: **0 303 563**
**A2**

## EUROPÄISCHE PATENTANMELDUNG

(21) Anmeldenummer: **88810341.3**

(22) Anmeldetag: **26.05.88**

(51) Int. Cl.⁴: **G 01 B 7/02**
**G 01 B 7/14**

(30) Priorität: **11.06.87 CH 2192/87**

(43) Veröffentlichungstag der Anmeldung:
**15.02.89 Patentblatt 89/07**

(84) Benannte Vertragsstaaten:
**CH DE FR GB IT LI SE**

(71) Anmelder: **C.A. Weidmüller GmbH & Co.**
**Klingenbergstrasse 16**
**D-4930 Detmold (DE)**

(72) Erfinder: **Vornfett, Karl-Ulrich**
**Krippenhof 20**
**D-7570 Baden-Baden (DE)**

(74) Vertreter: **Hepp, Dieter et al**
**HEPP & Partner AG Marktgasse 18**
**CH-9500 Wil (CH)**

(54) **Sensoreinrichtung mit Kompensationsanordnung.**

(57) Die Sensoreinrichtung besitzt eine Sensorkopf (1) mit einem Oszillator (4), dessen Frequenz in Abhängigkeit von der Veränderung einer Sensorkapazität oder -induktivität (5) variiert. Die Oszillatorschwingungen werden über ein Koaxialkabel (3) einer Auswerte- und Bedieneinheit (2) zugeführt, welche die Frequenzänderungen auswertet. Der Sensorkopf (1) enthält ferner Temperaturmessmittel ($R_T$, T), welche einen temperaturabhängigen Speisestrom verbrauchen. Der Speisestrom, der über das Koaxialkabel (3) zugeführt wird, wird in der Auswerte- und Bedieneinheit (2) gemessen und in einer Messschaltung (11) in ein Signal umgewandelt, das die Temperatur des Sensorkopfes (1) angibt. Dieses Signal wird verwendet, um über eine Mikroprozessor-Steuerschaltung (7) eine steuerbare Spannungsquelle (13) einzustellen, die die Speisespannung über das Koaxialkabel (3) zum Sensorkopf (1) liefert. In diesem beeinflusst die Höhe der Speisespannung eine steuerbare Reaktanz ($C_S$), die im Schwingkreis des Oszillators (4) angeordnet ist. So kann durch die von der Temperatur des Sensorkopfes (1) abhängigen Aenderungen der Speisespannung die Temperaturabhängigkeit der Oszillatorfrequenz ausgeglichen werden.

Fig.2

EP 0 303 563 A2

## Beschreibung

### Sensoreinrichtung mit Kompensationsanordnung

Die Erfindung betrifft eine Sensoreinrichtung zum berührungslosen Messen des Abstands zwischen einem metallischen Objekt und einer Messelektrode gemäss Oberbegriff von Patentanspruch 1. Aehnliche Sensoreinrichtungen sind z.B. aus der DE-OS-27 26 648, der DE-OS-28 29 851, der DE-OS-27 47 539, der US-PS-3,716,782 oder der US-PS-3,851,242 bekannt. Die bekannten Anordnungen dienen vor allem dazu, den Abstand zwischen einer Kapazität oder einer Induktivität eines Oszillators und einem metallisch leitfähigen Körper dadurch zu ermitteln, dass Frequenzänderungen des Oszillators durch Beeinflussung des metallischen Körpers in proportionale Analog- oder Digitalsignale umgewandelt werden. Diese Signale lassen sich in bekannter Weise zur Ansteuerung von Servosystemen verwenden, um z.B. vorgewählte Soll-Abstände zu realisieren.

In der Praxis hat es sich gezeigt, dass an solche Anordnungen konträre, scheinbar nicht vereinbare Anforderungen gestellt werden: Einerseits wird häufig durch Leitungsinduktivitäten und Leitungskapazitäten der Induktivitätswert oder der Kapazitätswert zwischen Messelektrode und Objekt verfälscht oder durch Störspannungen überlagert. Dies erfordert, dass die Verbindungsleitung zwischen Messelektrode und Oszillator möglichst kurz ist, d.h. dass der Oszillator möglichst in einer Sensoreinheit bzw. einem Sensorkopf unmittelbar am Bearbeitungswerkzeug angeordnet sein soll. Noch störungssicherer wäre die Gesamtanlage, wenn auch die Auswertungseinheit im Sensorkopf angeordnet wäre, doch lässt sich dies schon deshalb nicht realisieren, weil meist die Baugrösse des Sensorkopfs begrenzt ist.

Andererseits sind Elektrode und Sensorkopf bei Anordnung am Bearbeitungswerkzeug in verstärktem Masse Temperatureinflüssen ausgesetzt, was vor allem bei thermischen Bearbeitungswerkzeugen zu grossen Temperaturschwankungen der in einem Sensorkopf angeordneten Bauteile führen kann. Dies führt vor allem bei den aktiven Bauelementen eines Oszillators zu temperaturbedingten Frequenzänderüngen, welche das Ausgangssignal verfälschen können.

Aus der US-PS-3,716,782 ist es bekannt, einen Thermistor zur Temperaturkompensation bei einer Sensoreinrichtung zum Messen kleiner Abstände vorzusehen. Diese Art der Kompensation eignet sich - wenn überhaupt - nur für geringe Temperaturschwankungen. Ersichtlicherweise folgt nämlich die Temperaturkompensation durch den Thermistor exakt der temperaturabhängigen Charakteristik dieses Bauteils. Oszillatorschaltungen mit aktiven Bauelementen weisen jedoch eine Temperatur-Drift auf, deren Frequenzänderung pro Aenderung einer Temperatureinheit einen völlig anderen Kurvenverlauf haben kann, als das Temperaturverhalten des Thermistors. Auch lassen sich durch eine solche Anordnung Langzeitveränderungen der Bauteile, welche eine Frequenzänderung zur Folge haben können, nicht kompensieren.

Aufgabe der Erfindung ist es demnach eine Sensoreinrichtung zum berührungslosen Messen des Abstands zwischen einem metallischen Objekt und einer Messelektrode zu schaffen, bei welcher die Frequenz des Oszillators bei kurzzeitigen oder langzeitigen Schwankungen, insbesondere Temperaturschwankungen abgeglichen werden kann. Unter Abgleich ist dabei zu verstehen, dass die Oszillatorfrequenz in der Weise jüstiert wird, dass sie einem bestimmten, vorgegebenen Abstand der Messelektrode zum metallischen Objekt entspricht. Die Anordnung soll dabei vor allem so ausgelegt sein, dass mit geringem bauteilmässigen Aufwand automatische Kompensation von Temperatureinflüssen am Sensorkopf ermöglicht wird. Erfindungsgemäss wird dies vor allem gemäss Kennzeichen der Patentansprüche gelöst.

Durch die Anordnung eines zweiten frequenzverändernden Elements im Oszillatorkreis, dessen frequenzändernde Eigenschaften durch Spannungsänderungen beeinflusst werden können, lässt sich die Oszillatorfrequenz praktisch beliebig abgleichen. Vor allem lassen sich auch komplexe Temperaturkurven aktiver Bauelemente dadurch kompensieren, dass das entsprechende Temperaturverhalten zunächst empirisch ermittelt wird, das die zur Kompensation erforderliche Veränderung der Spannungsversorgung für bestimmte Temperaturwerte gespeichert wird und dass diese Werte durch einen Regelkreis in an sich bekannter Weise "abgerufen" und zur Nachregelung der Spannungsversorgung und damit der spannungsabhängigen Reaktanz verwendet werden. Als spannungsabhängige Reaktanz hat sich in der Praxis besonders die Anordnung von Kapazitätsdioden im Eingangskreis des Oszillators bewährt. Da Kapazitätsdioden selbst eine gewisse Temperatur-Drift aufweisen, kann es in bestimmten Anwendungsfällen noch vorteilhafter sein, stattdessen im Eingangskreis des Oszillators eine Induktivität vorzusehen, die mit einer Vormagnetisierungs-Wicklung versehen ist. Je nach dem Grad der Vormagnetisierung ändert sich der Induktivitätswert und damit die Oszillatorfrequenz.

Wesentlich für die Erfindung ist es dabei, dass die Einrichtung zur veränderlichen Stromversorgung selbst ausserhalb des Sensorkopfs und möglichst im Abstand zum Bearbeitungswerkzeug angeordnet ist.

Besonders störungssicher und einfach im Aufbau lässt sich die Erfindung realisieren, wenn sowohl für die Uebertragung der Ausgangssignale des Oszillators zur Auswerte- und Bedieneinheit als auch für die Rückübertragung der veränderlichen Versorgungsspannung ein gemeinsames Kabel, vorzugsweise ein Koaxialkabel verwendet wird. Durch geeignete Bauteile lässt sich dabei die Signalfrequenz des Oszillators ohne weiteres von der Versorgungsspannung trennen, die in der Regel eine Gleichspannung ist.

Zur Kompensation einer temperaturbedingten Drift der Oszillatorfrequenz sieht die Erfindung vor, dass der Sensorkopf Temperaturmessmittel enthält, welche einen temperaturabhängigen Speisestrom verbrauchen, und dass die Auswerte- und Bedieneinheit Mittel zum Messen des Speisestroms enthält. Die Erfindung nutzt damit auf optimal einfache Weise die im Wert des jeweils aufgenommenen Speisestroms enthaltene Information über den aktuellen Temperaturwert dadurch, dass die Auswerte- und Bedieneinheit Spannungssteuermittel zum Aendern der Speisespannung in Abhängigkeit vom gemessenen Speisestrom enthält, um temperaturbedingte Aenderungen der Oszillatorfrequenz zu kompensieren. Ersichtlicherweise kann dabei erfindungsgemäss die Schaltung dadurch optimiert werden, dass alle drei zwischen dem Sensorkopf und der Auswerte- und Bedieneinheit ausgetauschten Informationen, nämlich (1.) die abstandsproportionale Oszillatorfrequenz, (2.) der temperaturabhängige Speisestrom und (3.) das zur veränderlichen Reaktanz rückgeführte Spannungssignal zur Kompensation über das gleiche Kabel übermittelt werden. Die Temperaturinformation wird dabei als Modulation des Speisestroms und das Kompensationssignal für die Reaktanz als Veränderung der Speisespannung übertragen.

Durch geeignete Reglerschaltungen lässt sich dabei sowohl die Kompensation als auch der Abgleich unter bestimmten Bedingungen / zu bestimmten Zeiten automatisieren. Auch lassen sich in der Auswerte- und Bedienungseinheit Signalgeber vorsehen, die ein Warnsignal abgeben, wenn die von den Spannungssteuermitteln abgegebene Speisespannung einen oberen Grenzwert überschreitet oder einen unteren Grenzwert unterschreitet; dies kann z.B. das Erreichen kritischer Frequenzabweichungen andeuten.

Um die Stromaufnahme des Sensorkopfs möglichst zu stabilisieren, ist es vorteilhaft, wenn eine Stromstabilisierungsschaltung zur Speisung des Oszillators vorgesehen ist.

In der Praxis lässt sich allerdings nicht ganz vermeiden, dass durch Erhöhung der an die Reaktanz gelegten Spannung auch eine Stromerhöhung bewirkt wird. Diese ist bei der Verwendung von Kapazitätsdioden relativ gering. Bei der Verwendung einer Schwingkreisspule mit Vormagnetisierungs-Wicklung kann Spannungserhöhung zu einer deutlichen Erhöhung der Stromaufnahme führen, welche die Aenderung des elektromagnetischen Felds der Vormagnetisierungs-Wicklung bewirkt. Diese spannungsabhängige Stromerhöhung kann jedoch empirisch ermittelt werden, so dass in der Auswerte- und Bedieneinheit das durch eine Temperaturerhöhung bedingte Ansteigen des Speisestroms getrennt werden kann von einer Stromerhöhung, die durch eine Erhöhung der Speisespannung bewirkt wird.

Die Erfindung ist im folgenden in Ausführungsbeispielen anhand der Zeichnungen näher erläutert. Es zeigen:

Figur 1 Die schematische Darstellung einer Sensoreinrichtung mit den Merkmalen der Erfindung,

Figur 2 das Blockschaltbild eines abgewandelten Ausführungsbeispiels mit automatischer Temperatur-Kompensation,

Figur 3 die schematische Darstellung eines abgewandelten Sensorkopfs, wie er bei der Anordnung gemäss Figur 1 verwendet werden könnte und

Figur 4 ein weiter abgewandeltes Ausführungsbeispiel mit induktiver Messelektrode.

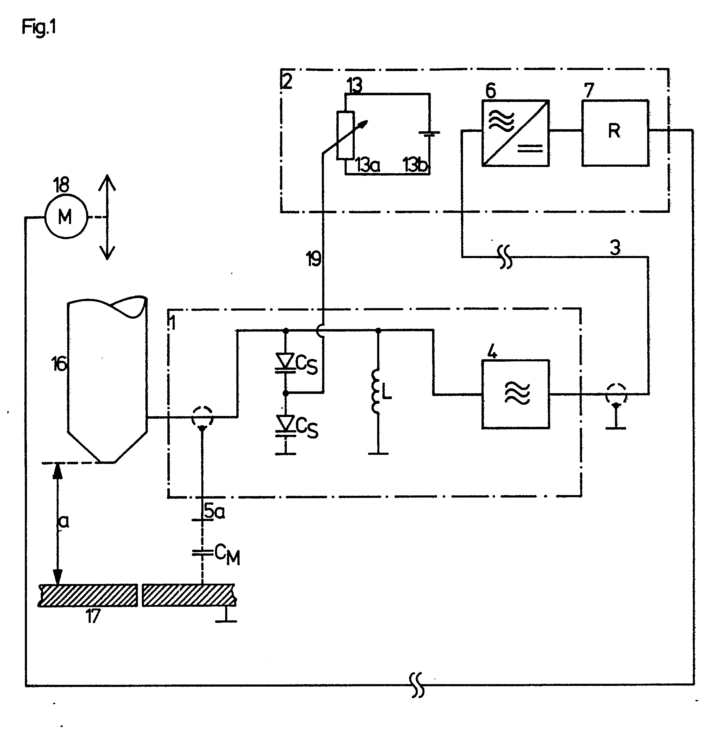

In Figur 1 sind schematisch diejenigen Bauteile als Sensorkopf 1 (gestrichelte Linie) angedeutet, die zusammen mit einer kapazitiven Messelektrode 5a an einem Bearbeitungswerkzeug 16 befestigt sind. Mittels der Messelektrode 5a bzw. dem Sensorkopf 1 soll der Abstand a zu einem Werkstück 17 ermittelt werden. Beim Ausführungsbeispiel ist als Bearbeitungswerkzeug 16 eine Laserdüse angedeutet, welche eine als Werkstück 17 dienende Metallplatte durchschneidet. Selbstverständlich ist die Erfindung nicht auf diese Art von Bearbeitungswerkzeugen beschränkt. Im Sensorkopf 1 ist ein Oszillator 4 vorgesehen, dessen Frequenz durch eine Induktivität L, zwei Kapazitätsdioden $C_S$ und die Kapazität $C_M$ der Messelektrode 5a bestimmt wird. Sensorkopf 1 und Messelektrode 5a sind durch eine nicht näher dargestellte Halterung am Bearbeitungswerkzeug 16 befestigt. Der Ausgang des Oszillators 4 ist über ein Koaxialkabel 3 mit einer Auswerte- und Bedieneinheit 2 verbunden. In der Auswerteeinheit 2 ist als Signalverarbeitungsschaltung 6 ein Wandler vorgesehen, welcher die vom Oszillator 4 abgegebenen Hochfrequenzsignale in Analogsignale umwandelt. In der Praxis können dabei z.B. Bandfilter und Diskriminatorschaltungen vorgesehen werden. Die Ausgangssignale der Signalverarbeitungsschaltung 6 werden in an sich bekannter Weise einer Mikroprozessor-Steuerschaltung 7 zugeführt, die über nicht näher gezeigte Stromversorgungs-Einrichtungen in bekannter Weise einen Motor 18 ansteuert. Der Motor 18 dient dem Heben und Senken des Bearbeitungswerkzeugs 16. In Abhängigkeit von der Auslegung des Sensorkopfs 1 bzw. der Signalverarbeitungsschaltung 6 und der Mikroprozessor-Steuerschaltung 7 führt also jede Veränderung des Abstands a zwischen Messelektrode 5a und Werkstück 17 zu einer Veränderung der Kapazität $C_M$, was eine Aenderung der Frequenz des Oszillators 4 bewirkt und entsprechende Nachführsignale an den Motor 18 auslöst. Zuverlässige Nachregelung lässt sich dabei nur insoweit gewährleisten, wie die Ausgangsfrequenz des Oszillators 4 tatsächlich dem Abstand a zwischen Messelektrode 5a und Werkstück 17 entspricht. Jede Frequenzänderung, die z.B. durch eine Veränderung der Bauteile des Oszillators 4 bewirkt wird führt ersichtlicherweise zu einem Fehlersignal das bewirkt, dass eine Nachregelung des Motors 18 ausgelöst wird, ohne dass tatsächlich eine Veränderung des Abstands a eingetreten wäre. Zur Kompensation derartiger Frequenzänderungen, die nicht durch eine Abstandsänderung ausgelöst werden, ist in der Auswerteeinheit 2 eine steuerbare Spannungsquelle 13 vorgesehen. Schematisiert ist dabei angedeutet, wie durch ein Potentiometer 13a eine veränderliche Spannung von einer Gleichspannungsquelle 13b abgegriffen werden kann. Die steuerbare Spannungsquelle 13 ist über eine Leitung 19 mit dem Mittelabgriff zwischen den beiden Kapazitätsdioden $C_S$ verbunden. Um einen Abgleich oder eine Kompensation der Frequenz des Oszillators 4 zu erreichen, kann die Spannung der steuerbaren Spannungsquelle 13 verändert und damit der Kapazitätswert der Kapazitätsdioden $C_S$ vergrössert oder verkleinert werden. Dies führt ersichtlicherweise zu einer Aenderung der Frequenz des Oszillators 4, da die Kapazitätsdioden $C_S$ parallel zur Kapazität $C_M$ der Messelektrode 5 geschaltet sind. Die Ausgangsspannung der Spannungsquelle 13 kann dabei z.B. in Abhängigkeit von gemessenen Temperaturwerten am Sensorkopf 1 automatisch zur Frequenzkorrektur verstellt werden. Andererseits ist es aber auch möglich, z.B. das Bearbeitungswerkzeug 16 und damit die Messelektrode 5a in einen vorbestimmbaren Abstand zum Werkstück 17 zu fahren, in dieser vorbestimmbaren Lage die Frequenz des Oszillators 4 durch Nachstellen der steuerbaren Spannungsquelle 13 auf einen vorbestimmbaren Sollwert zu bringen und damit auch etwa durch eine Bauteilveränderung im Oszillator 4 aufgetretene Langzeit-Drift der Frequenz zu kompensieren.

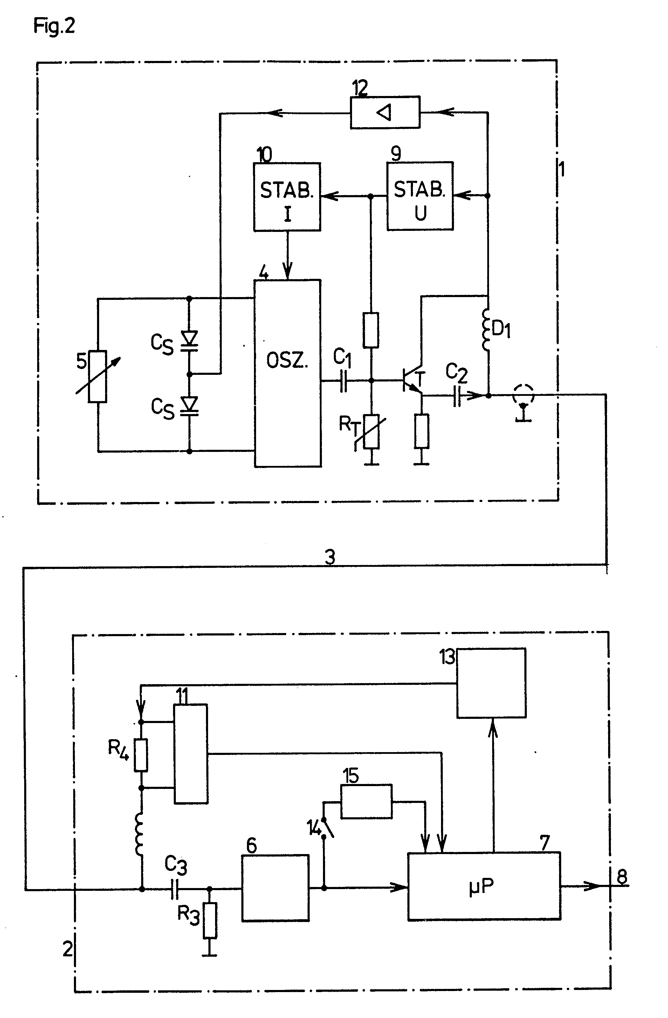

Figur 2 zeigt ein Blockschema einer Sensoreinrichtung mit automatischem Temperaturabgleich. Die dargestellte Sensoreinrichtung besteht aus einem Sensorkopf 1 und einer Auswerte-und Bedieneinheit 2, die durch ein Koaxialkabel 3 miteinander verbunden sind.

Der Sensorkopf 1 enthält einen Oszillator 4, in dessen Schwingkreis eine Messelektrode 5 in Form einer Kapazität oder Induktivität liegt, deren Grösse durch die Gegenwart eines leitenden Körpers (nicht dargestellt) und insbesondere durch den Abstand dieses Körpers vom Sensorkopf 1 veränderbar ist, wodurch auch die Oszillatorfrequenz entsprechend ändert. Die Oszillatorschwingung gelangt über einen Kopplungskondensator $C_1$, einen Transistor T und einen Kopplungskondensator $C_2$ zum Koaxialkabel 3.

In der Auswerte- und Bedieneinheit 2 wird die Oszillatorschwingung aus dem Kabel 3 über einen Hochpass $C_3/R_3$ einer Signalverarbeitungsschaltung 6 zugeführt, welche die Aenderungen der Oszillatorfrequenz in Gleichspannungsänderungen umwandelt. Die Gleichspannungsänderungen werden, nach Verarbeitung in einer Mikroprozessor-Steuerschaltung 7, einem Ausgang 8 zugeführt. Das Signal am Ausgang 8 kann in üblicher Weise zur Prozesssteuerung verwendet werden.

Die Basisspannung des Transistors T wird im Sensorkopf 1 von einem Spannungsteiler erzeugt, der einen temperaturabhängigen Widerstand $R_T$ enthält. Wenn sich die Temperatur des Sensorkopfes und damit der Wert des temperaturabhängigen Widerstandes $R_T$ ändern, dann ändert sich verstärkt auch der Speisestrom des Transistors T, den dieser über das Koaxialkabel 3 und eine Drossel $D_1$ bezieht. An die Drossel $D_1$ ist auch ein Spannungsregler 9 angeschlossen, der den Basisspannungsteiler des Transistors T und über einen Stromstabilisator 10 den Oszillator 4 speist. Damit ist die Grösse des aus dem Koxialkabel 3 bezogenen Speisestroms des Sensorkopfes 1 weitgehend nur vom Wert des temperaturabhängigen Widerstandes $R_T$

abhängig. In der Praxis ist selbstverständlich zu berücksichtigen, dass trotz des Stromstabilisators 10 ein Spannungsanstieg der Speisespannung zu einem geringfügigen Stromanstieg verschiedener Bauteile führen kann. Dieser von der Höhe der Speise spannung abhängige zusätzliche Speisestrom überlagert sich dem vom temperaturabhängigen Widerstand $R_T$ bestimmten Wert. Sofern die spannungsabhängige Stromänderung in der Schaltungsanordnung die Bedeutung einer Störgrösse annimmt, lassen sich derartige Veränderungen des Speisestroms empirisch ermitteln, z.B. in einer Mikroprozessor-Steuerung speichern und derart kompensieren, dass die nachstehend beschriebene Auswertung des Werts des Speisestroms nur solche Veränderungen berücksichtigt, die durch den temperaturabhängigen Widerstand $R_T$ verursacht werden.

Der Speisestrom des Sensorkopfes 1 erzeugt in der Auswerte-und Bedieneinheit 2 an einem Widerstand $R_4$ einen Spannungsabfall, der von einer Messschaltung 11 in ein Signal umgewandelt wird, das die Temperatur des Sensorkopfes 1 angibt. Mit diesem Signal können in der Auswerte- und Bedieneinheit 2 nicht dargestellte Mittel angesteuert werden, welche die Temperatur des Sensorkopfes numerisch anzeigen und/oder deren Grenzwerte kontrollieren.

Das Ausgangssignal der Messschaltung 11 kann aber auch dazu verwendet werden, die stets mehr oder weniger vorhandene Temperaturabhängigkeit der Oszillatorfrequenz zu kompensieren. Um das zu ermöglichen, ist im Schwingkreis des Oszillators 4 im Sensorkopf 1 eine steuerbare Reaktanz angeordnet. z.B. wie gezeichnet die spannungsabhängigen Kapazitätsdioden $C_S$. Eine Steuerschaltung 12 führt den Kapazitätsdioden $C_S$ eine Steuerspannung zu, deren Höhe von der Höhe der Speisespannung abhängt, die über das Koaxialkabel 3 zugeführt wird. Die Höhe der Speisespannung wird in der Auswerte-und Bedieneinheit 2 von einer steuerbaren Spannungsquelle 13 festgelegt. Das Ausgangssignal der Messschaltung 11 wird der Mikroprozessor-Steuerschaltung 7 zugeführt, die ihrerseits ein entsprechendes Steuersignal an die Spannungsquelle 13 abgibt, um durch Aenderung der Speisespannung und dadurch der Kapazität der Dioden $C_S$ temperaturbedingte Aenderungen der Oszillatorfrequenz auszugleichen.

Die über die Spannungsquelle 13 steuerbaren Kapazitätsdioden $C_S$ können zudem auch dazu verwendet werden, Abweichungen der Oszillatorfrequenz von einer Sollfrequenz, z.B. infolge von Alterung, zu kompensieren, d.h., eine Eichung oder Nacheichung vorzunehmen.

Unter Bedingungen, bei denen der Oszillator 4 eine Sollfrequenz erzeugen müsste, z.B. wenn ein zu messender elektrisch leitender Körper in einem Sollabstand vom Sensorkopf 1 gehalten ist, wird die tatsächliche Oszillatorfrequenz mit der Sollfrequenz verglichen. Das kann mit Hilfe der Signalverarbeitungsschaltung 6 geschehen, wenn diese einen genügend präzisen digital/analogen Frequenz/ Spannungswandler (etwa mit einem Quarzoszillator zur Steuerung eines count gates und mehreren zeitlich versetzt parallel arbeitenden Zählern) enthält. Andernfalls kann ein separater hochpräziser Frequenz/Spannungswandler verwendet werden oder kann ein auf analoger Basis arbeitender Frequenz/Spannungswandler in der Schaltung 6 vorgängig mit Hilfe eines stabilen Quarzoszillators genau abgeglichen werden.

Ein Signal, das die festgestellte Abweichmng der tatsächlichen Oszillatorfrequenz von der Sollfrequenz darstellt, wird dann neben dem Ausgangssignal der Messschaltung 11 der Mikroprozessor-Steuerschaltung 7 zugeführt, so dass diese die steuerbare Spannungsquelle 13 veranlasst, über die Speisespannung und die Kapazitätsdioden $C_S$ die Oszillatorfrequenz zu korrigieren.

Das die festgestellte Frequenzabweichung darstellende Signal könnte eine an einem Potentiometer manuell eingestellte Spannung sein. Vorzugsweise wird das Signal jedoch automatisch erzeugt, indem die von der Frequenzabweichung abhängige Ausgangsspannung der Schaltung 6 (oder ggf. eines separaten Frequenz/Spannungswandlers) über eine Schalter 14 einer Ein heit 15 zugeführt wird, die einen Analog/Digital-Wandler, einen Speicher und einen Digital/Analog-Wandler enthält, welcher aus dem Speicher die die festgestellte Frequenzabweichung darstellende Information ausliest und in analoger Form an die Mikroprozessor-Steuerschaltung 7 abgibt.

Im letzteren Fall ist die Möglichkeit gegeben, durch Setzen von zwei Grenzwerten extreme, nicht mehr vertretbare Veränderungen (z.B. durch Verschmutzung) zu indizieren. Die Auswerte- und Bedieneinheit 2 kann einen Signalgeber (nicht dargestellt) enthalten, der ein Warnsignal abgibt, wenn solche Veränderungen festgestellt werden oder wenn die Speisespannung einen oberen Grenzwert überschreitet oder einen unteren Grenzwert unterschreitet.

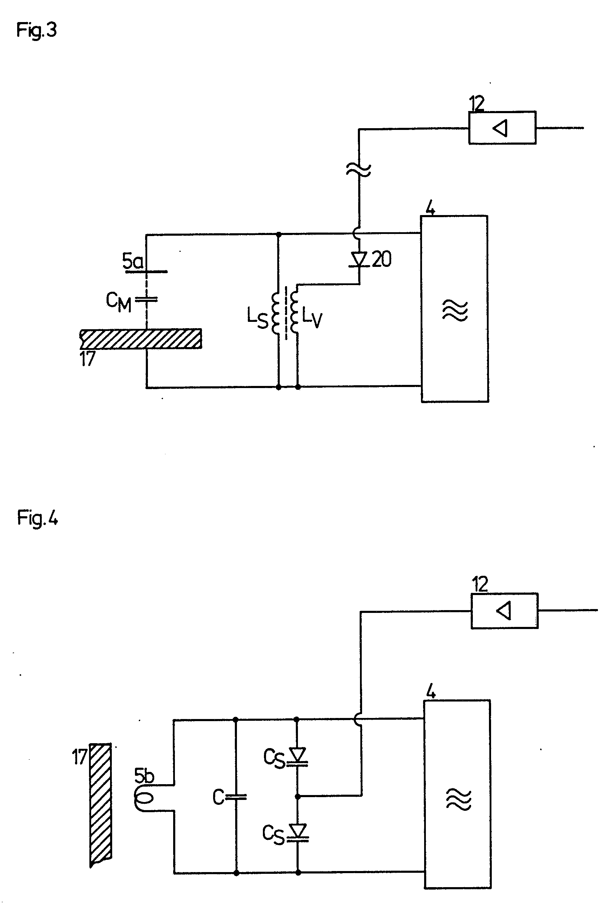

Beim Ausführungsbeispiel gemäss Figur 3 ist analog dem Ausführungsbeispiel gemäss Figur 1 die Kapazität $C_M$ zwischen der Messelektrode 5a und dem Werkstück 17 als frequenzbestimmendes Element am Eingang des Oszillators 4 vorgesehen. Zusätzlich ist eine Spule $L_S$ vorgesehen, welche mit der Kapazität $C_M$ einen Schwingkreis bildet. Die Spule $L_S$ ist entsprechend der Frequenz des HF-Oszillators 4 eine Hochfrequenz-Spule mit Schalenkern (nicht dargestellt). In der Spulenanordnung ist eine Vormagnetisierungs-Wicklung $L_V$ angeordnet, die je nach Grad der Vormagnetisierung zu einer teilweisen Sättigung des Kerns und damit zu einer Aenderung der Induktivität der Spule $L_S$ führt. Die Vormagnetisierungs-Wicklung $L_V$ wird analog dem Ausführungsbeispiel gemäss Figur 2 über eine Diode 20 von der Steuerschaltung 12 mit Gleichspannung bzw. Gleichstrom gespeist. Jede Veränderung der Speisespannung und damit des Speisestroms führt zu einer Aenderüng der Vormagnetisierung sowie einer Aenderung der Schwingkreis-Induktivität und damit zu einer Frequenzänderung. Damit lässt sich eine Kompensation analog dem Ausführungsbeispiel gemäss Figur 1 oder Figur 2 erreichen.

Figur 4 zeigt ein Ausführungsbeispiel, bei welchem die Messelektrode als Spule 5b ausgebildet ist. Durch das metallische Werkstück 17 wird der Induktivitätswert der Spule 5b infolge von Wirbelströmen oder Dämpfung beeinflusst, so dass jede Aenderung der Relativlage von Messelektrode 5b und Werkstück 17 zu einer Frequenzänderung des Oszillators 4 führt. Im Eingangskreis des Oszillators 4 sind ausser einem Kondensator C noch Kapazitätsdioden $C_S$ analog dem Ausführungsbeispiel gemäss Figur 2 vorgesehen. Die Frequenzkompensation erfolgt analog.

## Patentansprüche

1. Sensoreinrichtung zum berührungslosen Messen des Abstands zwischen einem metallischen Objekt, insbesondere einem Werkstück (17) und einer kapazitiven oder induktiven Messelektrode (5, 5a, 5b) die an einem Bearbeitungswerkzeug (16), insbesondere einem thermischen Bearbeitungswerkzeug zur Laser-Bearbeitung, zum Schweissen, Brennschneiden oder Plasma-Schneiden vorgesehen ist, wobei am Bearbeitungswerkzeug (16) ein Sensorkopf (1) mit einem Oszillator (4) angeordnet ist, an welchem die Messelektrode (5, 5a, 5b) als frequenzveränderndes Element angeschlossen ist, und wobei der Ausgang des Oszillators über eine Verbindungsleitung (3) mit einer Auswerte- und Bedieneinheit (2) zur Auswertung der Oszillatorsignale verbunden ist, dadurch gekennzeichnet, dass der Oszillator (4) eine spannungs- oder stromabhängige Reaktanz ($C_S$, $L_S$) enthält, dass eine steuerbare Spannungsquelle (13) zur veränderlichen Spannungs- bzw. Stromversorgung zur Veränderung des Kapazitäts- bzw. Induktivitäts-Werts der Reaktanz direkt oder indirekt mit dieser verbunden ist, und dass die Spannungsquelle (13) in der Auswerte- und Bedieneinheit (2) angeordnet ist.

2. Sensoreinrichtung nach Anspruch I, dadurch gekennzeichnet, dass die Verbindungsleitung (3) ein abgeschirmtes Kabel, vorzugsweise ein Koaxialkabel ist, und dass sowohl die Ausgangsignale des Oszillators (4) mittels Ankopplungselementen ($C_1$, $C_2$, $C_3$) als auch die von der Spannungsquelle (13) erzeugte veränderliche Versorgüngsspannung durch die Verbindungsleitung übertragen wird.

3. Sensoreinrichtung nach Anspruch 1 oder 2, dadurch gekennzeichnet, dass der Sensorkopf (1) Temperaturmessmittel ($R_T$,T) enthält, welche einen temperaturabhängigen Speisestrom verbrauchen, und dass die Auswerte- und Bedieneinheit (2) Mittel ($R_4$, 11) zum Messen des Speisestroms enthält.

4. Sensoreinrichtung nach Anspruch 3, dadurch gekennzeichnet, dass die Auswerte- und Bedieneinheit (2) Spannüngssteuermittel (7, 13) zum Aendern der Speisespannung in Abhängigkeit vom gemessenen Speisestrom enthält, um temperaturbedingte Aenderungen der Oszillatorfrequenz zu kompensieren.

5. Sensoreinrichtung nach Anspruch 4, dadurch gekennzeichnet, dass die Auswerte- und Bedieneinheit (2) Reglermittel (6,14,15, 7) enthält, welche betätigbar sind, um die Oszillatorfrequenz zu messen und in Abhängigkeit von der gemessenen Frequenz die steuerbare Spannungsquelle (13) derart einzustellen, dass die Frequenz einen vorbestimmten Wert annimmt.

6. Sensoreinrichtung nach Anspruch 5, dadurch gekennzeichnet, dass die Auswerte- und Bedieneinheit (2) einen Speicher (15) zum Speichern der Einstellung der Spannungsquelle (13) enthält.

7. Sensoreinrichtung nach Anspruch 5 oder 6, dadurch gekennzeichnet, dass die Auswerte- und Bedieneinheit (2) einen Signalgeber enthält zur Abgabe eines Warnsignals, wenn die von der Spannungsquelle (13) abgegebene Speisespannung einen oberen Grenzwert überschreitet oder einen unteren Grenzwert unterschreitet.

8. Sensoreinrichtung nach einem der Ansprüche 1 bis 7, dadurch gekennzeichnet, dass der Sensorkopf (1) eine Stromstabilisierungsschaltung (10) zur Speisung des Oszillators (4) enthält.

9. Sensoreinrichtüng nach einem der Ansprüche 3 bis 8, dadurch gekennzeichnet, dass die Temperaturmessmittel ($R_T$, T) einen Spannungsteiler mit einem temperaturabhängigen Widerstand ($R_T$) enthalten und dass der Sensorkopf (1) eine Spannungsstabilisierungsschaltung (9) für die Speisung wenigstens dieses Spannungsteilers enthält.

10. Sensoranordnung nach einem der vorangegangenen Ansprüche, dadurch gekennzeichnet, dass die Reaktanz eine Kapazitätsdiode ($C_S$) ist.

11. Sensoranordnung nach einem der vorangegangenen Ansprüche 1-9, dadurch gekennzeichnet, dass im Eingangskreis des Oszillators als veränderliche Reaktanz eine Spule ($L_S$) mit einer Vormagnetisierungs-Wicklung ($L_V$) vorgesehen ist.

Fig.1

Fig.2

**Fig.3**

**Fig.4**